# EUROPEAN PATENT SPECIFICATION

(11) **EP 3 302 835 B1**
(45) Date of publication and mention of the grant of the patent: **09.04.2025**
(21) Application number: 16726586.7
(22) Date of filing: 02.06.2016
(51) Int. Cl.: B08B 9/055

(54) **APPARATUS AND METHOD OF CLEANING PIPES**
VORRICHTUNG UND VERFAHREN ZUR REINIGUNG VON ROHREN
APPAREIL ET PROCÉDÉ DE NETTOYAGE DE TUYAUX

(30) Priority: 03.06.2015 GB 201509595
(43) Date of publication of application: 11.04.2018
(73) Proprietor: Aluminium Oxid Stade GmbH, 21683 Stade (DE)
(72) Inventor: NOLLMANN, Andreas, 21769 Hollen (DE); LALLA, André, 21706 Drochtersen (DE)
(74) Representative: Boult Wade Tennant LLP
(86) International application number: PCT/EP2016/062536
(87) International publication number: WO 2016/193388

(56) References cited:
- US-A- 4 538 316
- US-A- 4 538 316
- US-A- 4 538 316
- US-B1- 6 173 469
- US-B1- 6 368 418
- US-B1- 6 368 418
- DATABASE WPI Derwent World Patents Index; AN 1981-K6536D, XP002762110
- DATABASE WPI Derwent World Patents Index; AN 1975-A9792W, XP002762111
- DATABASE WPI Derwent World Patents Index; AN 1984-144454, XP002762112

## Description

The disclosure relates to an apparatus for cleaning piping and a method of cleaning piping. In particular, the apparatus may be a "pig", a device for insertion into a pipe for removing deposits from the inner surface of the pipe.

The disclosure is particularly applicable in the field of alumina production. In this field, it is common to obtain alumina from bauxite by grinding the bauxite, mixing this with caustic liquor to form a slurry, and heating the slurry. This leads to the alumina trapped in the bauxite dissolving to form a supersaturated solution of alumina in the caustic liquor with a suspension of the residue from the bauxite. Using known methods, alumina can be recovered from such a solution.

Slurry is, for example, heated in a tube heat exchanger that comprises several kilometres of piping having a diameter of approximately 4 to 8 inches (10.16 centimetres to 20.32 centimetres). In view of the great length of the piping, this is typically arranged in a compact form as a plurality of linear pipes in parallel joined by bends. The piping is heated to increase the temperature of the slurry as it passes through the piping. The slurry is forced through the piping using a high-pressure pump.

An undesirable result of this process is that minerals from the slurry can crystallise on the inner surface of the piping. Amongst the deposits, it is common to find quartz, sodalite, vishnevite, boehmite, calcium titanate, cancrinite, natrodavyne, hematite, magnetite and other components. As the deposits build up in thickness on the inner surface of the piping, the heat transfer to the slurry is hindered, the pressure loss increases and the efficiency of the overall process is reduced.

Accordingly, it is known to periodically clean the piping in order to maintain good heat transfer to the slurry.

In the field of alumina extraction, this is typically done by passing sulphuric acid down the piping to remove sodalite, and by high pressure jet washing to remove the harder deposits, such as quartz, iron titanate, boehmite, or calcium titanate. Whilst these processes have had some success, unless carried out for prolonged periods, they cannot guarantee that after cleaning the piping will have sufficient diameter. In addition the process of high pressure jet washing is time consuming and can present dangers to the operator - in particular during the loading and unloading of the jet washing apparatus from the piping and furthermore presents danger to the integrity of the tubes of the heat exchanger.

In unrelated fields, it is known to carry out a process called "pigging", using a device commonly referred to as a "pig". An example of a prior art pig is described in US 4 573 231 A. This pig is a device that is forced down a pipe under the action of water pressure. It has three spring plates, arranged to fit tightly within a pipe so that water forced into the pipe pushes the device along. Ahead of the spring plates is an interchangeable cutting head having a series of cutting wheels for cutting relatively soft encrustations on the inner surface of a pipe. Such pigs are designed to remove all of the deposits within a pipe and thereby to completely uncover the inner wall of the pipe. The pig of US 4 573 231 A has been found to be unsuitable for use in removing hard deposits, such as those encountered during alumina production, because the design of the cutting wheels is insufficiently robust.

US 6 368 418 B1 discloses a pipeline cleaning tool with an elongated support mechanism having a rigid cutting unit mounted at one end and a folding propulsion assembly mounted at the other end.

WO 2011/033248 A1 discloses a pipe cleaning apparatus arranged for passage along a pipe during use.

A method of removing a layer of encrustation from an inner surface of a pipe is provided according to claim 1.

A method of operating an alumina extraction plant is provided according to claim 14.

Further embodiments of the invention are provided by the dependent claims

The inventors have discovered that a pipe cleaning device may be applied in an alumina extraction system such as that described above to obtain surprisingly good results by repeated operations. Pigging is not normally carried out on deposits as hard as those found in alumina extraction systems. Furthermore, the inventors have realised that the use of a pipe cleaning device allows a controlled amount of deposit to be left on the inner surface of a pipe to act as a protective layer preventing or hindering corrosion of the pipe.

Advantageously, pipe cleaning devices may be used in multiple pipes simultaneously, whereas prior art water-jetting cleaning approaches cannot.

For a better understanding of the disclosure and to show how the same may be put into effect, reference is now made, by way of example only, to the accompanying drawings in which:
Figure 1a shows a side view of a pipe cleaning device according to the present disclosure within a pipe bearing encrustations;
Figure 1b shows a close-up view of a part of the pipe cleaning device of Figure 1a;
Figure 2a shows a close-up cross-sectional view of the part of the pipe cleaning device shown in Figures 1a and 1b, in which an arm has been forced inwardly, and an insert rotated;
Figure 2b shows a perspective view of the full pipe cleaning device shown in close-up in Figure 2a;
Figure 3a shows a side view of an insert with teeth; and
Figure 3b shows a perspective view of an insert.

The figures show a pipe cleaning device 1 for removing deposits from the inner surface of a pipe 5.

The pipe cleaning device 1 comprises a propelling piston 10. The propelling piston 10 substantially blocks the pipe 5 so that fluid pressure can force the pipe cleaning device 1 along the pipe. The propelling piston 10 preferably comprises apertures to allow a portion of the fluid driving the pipe cleaning device 1 along the pipe 5 to pass the propelling piston 10 and thereby dislodge any loose matter ahead of the pipe cleaning device 1.

The propelling piston 10 may be formed of one or more flexible diaphragms 11. The flexible diaphragms 11 may, for example, comprise a plurality of flexible plates forming sectors of a circle that are spaced apart to provide apertures through which fluid may flow. The plates may be leather, rubber, or some other material. The leather, rubber, or otherwise flexible plates will be flexible enough to deform where it meets the inner wall of the pipe and/or encrustations to substantially seal the pipe but for the apertures. The apertures can be configured to allow a small amount of fluid to pass ahead of the pipe cleaning device 1, whilst still enabling fluid to force the propelling piston 10 along the pipe 5. The flexible plates may be reinforced by providing metal plates adjacent one or both faces of the flexible plates.

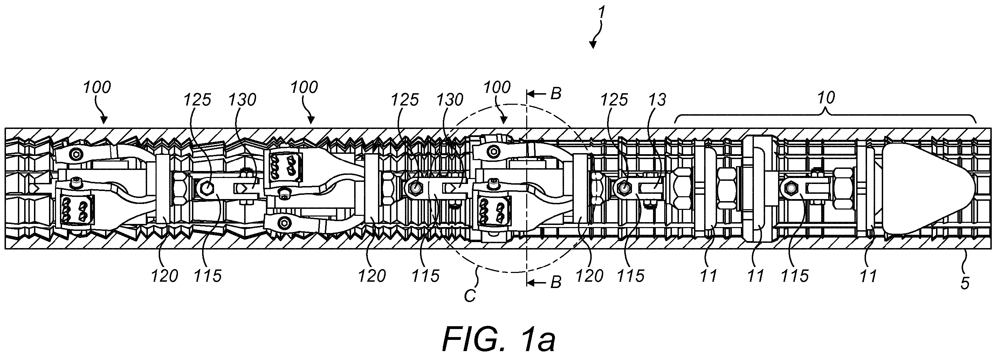

One or more cleaning tools 100 may be attached to the propelling piston 10. Three are shown in Figure 1a.

Each cleaning tool 100 comprises a main body 110 and a plurality of circumferentially-spaced arms 200. The arms 200 may be arranged in pairs on opposing sides of the main body 110. However, in the example shown in the Figures, the cleaning tools 100 each have three circumferentially-spaced arms 200. In general, it is preferable to provide as many arms 200 as possible in view of the space requirements of the particular application. The arms 200 are pivotably attached to the main body and urged by an urging force to pivot away from a longitudinal axis of the main body 110. When in use, the longitudinal axis of the main body 110 coincides with the direction of travel of the pipe cleaning device 1 along the pipe 5. Thus, the longitudinal axis defines a front end and a rear end of the main body 110.

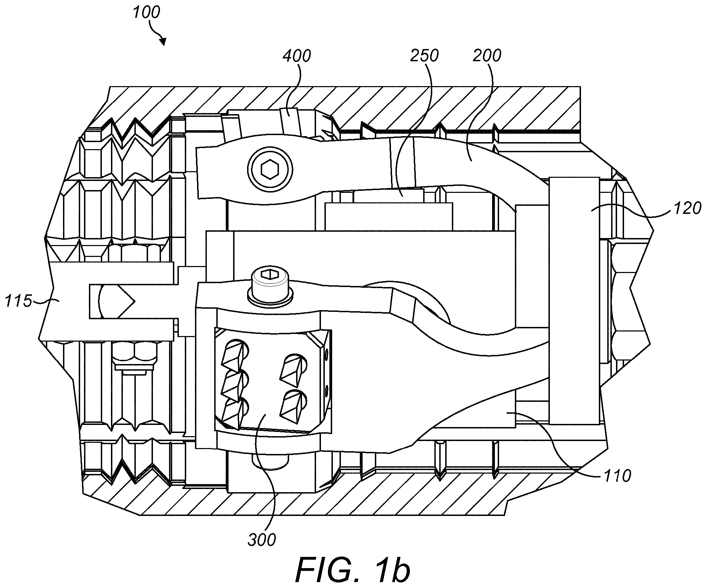

The arms 200 are prevented from rotating beyond a predetermined angle by the provision of a stop member 120, which is shown in Figures 1a and 1b as a collar surrounding the body 110. The arms 200 have a working surface arranged to engage encrustations on the inner surface of the pipe 5. When the arms 200 abut the stop member 120, the working surfaces of the arms 200 define the maximum outer diameter of the cleaning tool 100.

An urging means 250 is provided for each arm 200. The urging means 250 is arranged to pivotally bias the arm 200 away from the main body 110. When the pipe cleaning device 1 contacts an encrustation, the momentum of the pipe cleaning device 1 moving along the pipe 5 causes the working surfaces to strike and/or scrape against the encrustations. Since the arms 200 are able to pivot towards the main body 110 against the bias, encrustations that are too hard to be immediately removed will cause the arms 200 to deflect inwardly, allowing the pipe cleaning device 1 to pass the obstacle. Whilst such a contact may not immediately completely remove the encrustation, the repeated percussive action of potentially plural working surfaces on each subsequent pass of the pipe cleaning device 1 along that region of the pipe 5 can gradually weaken the encrustation until it is removed entirely or substantially.

An example of a suitable urging means 250 is a piston in a bore formed in the main body 110. The piston may be driven outwardly by pneumatic and/or hydraulic pressure (for example, in the range 30 to 40 bar) to generate the urging force. In such an embodiment, it is preferable that the bores of the urging means 250 in each cleaning tool 100 are in communication such that the pistons are driven outwardly by the same force. The pressure within the pistons may be controlled to determine the urging force.

Alternatively, the urging means 250 may comprise a resilient member, such as a spring. The resilient member may extend between a cavity in the main body 110 and a cavity in the arm 200. The resilient member may be replaceable with a different resilient member of different stiffness and/or length in order to change the urging force.

The cleaning tools 100 may be connected together via connectors 115, which can be connected to a connection point 125 at the front end of the body 110 and a connection point 130 at the rear end of the body 110.

The propelling piston 10 may comprise a connection point 13 at its rear end, and so the connection point 125 at the front end of a cleaning tool 100 may be connected to the propelling piston 10 via a connector 115.

The connectors 115 may be an elongate member with a bore at each end, wherein the bores extend perpendicular to the direction of elongation of the connector 115 and perpendicular to each other. The connector may therefore be pivotally attached to a connection point 125, 130, 13 at each end such that it defines a universal joint between adjacent cleaning tools 100, or between a cleaning tool 100 and the propelling piston 10.

In this way, the pipe cleaning device 1 may be formed of a series of a propelling piston 10 and a selectable number of cleaning tools 100. By the provision of the universal joint between each component, the pipe cleaning device 1 can follow a pipe 5 having a number of bends, irrespective of the length of the pipe cleaning device 1. Preferably, the cleaning tools 100 are arranged such that the arms 200 of each cleaning tool 100 may be set at a desired relative rotational alignment relative to the arms of another cleaning tool 100. In this way, the arms 200 of the plurality of cleaning tools 100 forming the pipe cleaning device 1 may be arranged to contact a different region of the circumference of the inner surface of the pipe 5 (and/or the encrustations).

The pipe cleaning device 1 may advantageously be provided as a kit of parts including a propelling piston 10 and a set of cleaning tools 100. The operator may select an appropriate number of cleaning tools for each pass of the pipe cleaning device 1 along the pipe 5.

Each arm 200 has an insert 300 on its distal end for engaging deposits on the inner surface of the pipe 5. The insert 300 comprises the working surface, preferably formed by one or more teeth 400 of the insert 300.

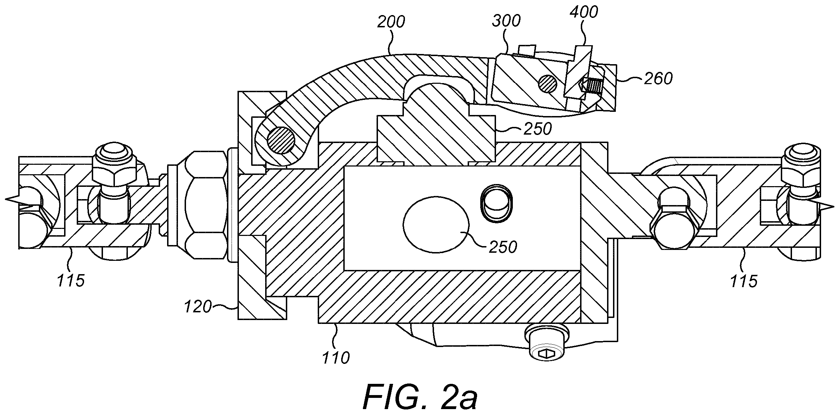

Each insert 300 may be arranged to pivot about an axis 320 relative to the arm 200. As can be seen in Figure 2a, the insert 300 may be pivotably held within an aperture 260 in the arm 200. The insert 300 is prevented from rotating continually by its abutment with the sides of the aperture 260. In general, it is preferable for the insert to be able to rotate such that it is aligned with the wall of the pipe 5 when the arm 200 is extended outwardly fully. In some preferred embodiments, this will mean that each insert 300 is arranged to pivot relative to the arm 200 from a nominal position in each direction by an angle of up to 6 degrees.

Preferably, the working surface of the insert 300 comprises two or more rows of teeth 400. Preferably, each row is spaced apart in the direction of the longitudinal axis of the main body 110.

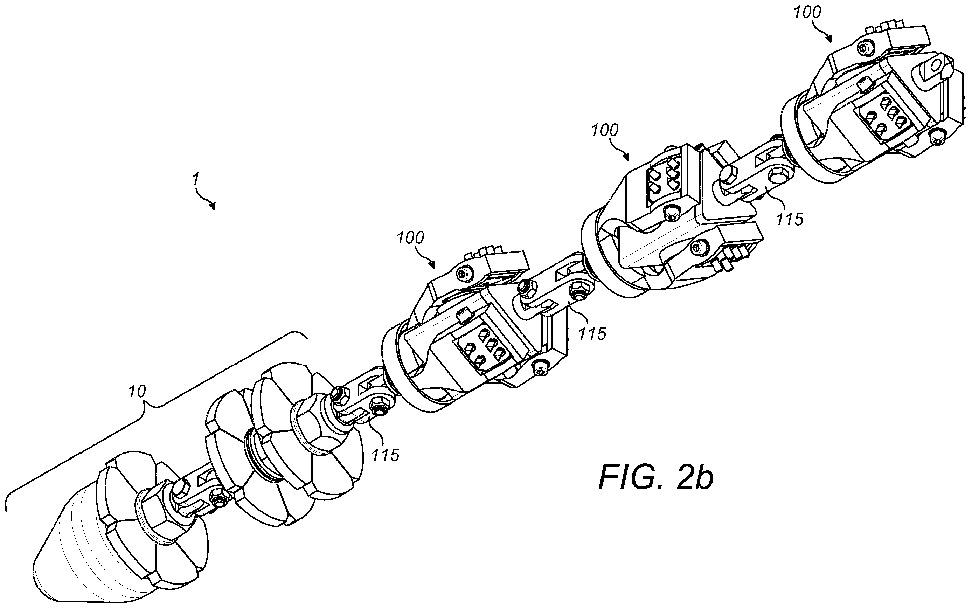

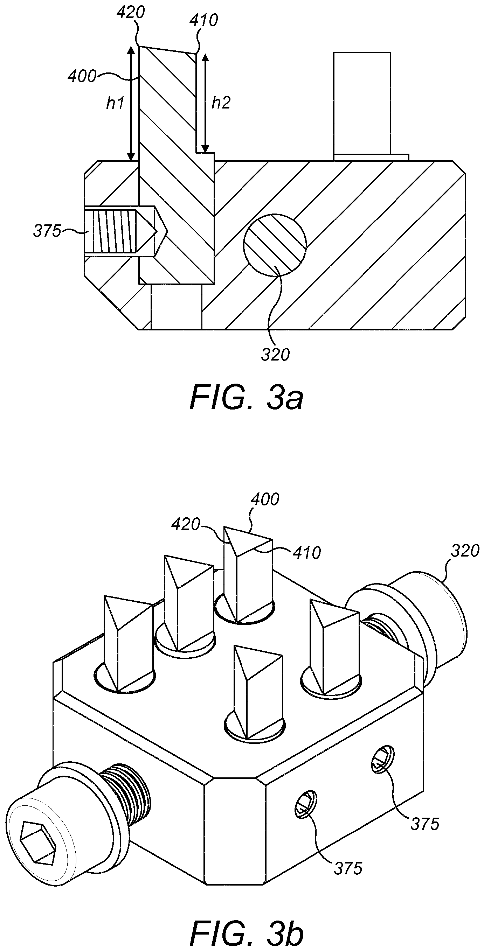

The inserts 300 are preferably interchangeable, which allows them to be replaced when worn. Furthermore, as can be seen in Figures 2 and 3a, each tooth 400 of an insert 300 may be individually replaceable. The number of rows of teeth may therefore be adjusted. As can be seen in Figures 2a and 3a, the teeth 400 may be held in place using a grub screw 375.

As can be seen from Figures 3a and 3b, each of the teeth 400 that define the working surface on the distal end of each arm 200 have a height h1 on a rear face of the tooth 400 (in the longitudinal direction of the main body 110) that is greater than the height h2 on a front face of the tooth 400. The teeth 400 thus have a sloped surface as can be seen in Figures 3a and 3b, which enables the teeth 400 to run across the inner surface of the pipe 5 without engaging or scratching the pipe 5 when the encrustations have been completely or substantially removed.

A front edge at the distal end of the front face of the teeth 400 forms a cutting edge 410. Whilst the teeth 400 may be rectangular in cross-section, with a front edge 410 and a rear edge 420, it has been found to be advantageous to provide teeth 400 with a triangular cross-section, with a front edge 410 and a rear point 420 - as shown in the figures.

The rear 420 of each of the teeth 400 is located at a distal end of the rearmost face or edge. When encrustations are present on the inner surface of the pipe, the arm 200 will be deflected inwardly as shown in Figure 2a which will orientate the cutting edge 410 so that it engages the encrustation with a cutting, percussive or hammering action.

The cutting edge 410 will be spaced from the inner pipe surface when the surface is free or substantially free of encrustations, as can be seen in Figure 1b, due to the greater height h1 of the rear 420 which causes the rear 420 to engage the inner pipe surface when the arm 200 is pivoted outwardly. Advantageously, when a pivotable insert 300 is provided, the provision of multiple rows of teeth 400 will tend to maintain a rotation of the insert about pivot 320 that is aligned with the inner surface of the pipe 5 and so will ensure that the cutting edge 410 is spaced therefrom.

Figure 1a depicts an arm 200 deflecting toward the main body 110 during a collision with an encrustation. As noted above, this deflection will preferably bring the cutting edge 410 of a first tooth 400 into contact with the encrustation. The cutting edge 410 may remove the encrustation or, if not, then as the first tooth 400 passes the encrustation the next tooth 400 will be driven into the encrustation percussively by the urging means 250 as the arm 200 is biased outwardly.

A pipe cleaning device 1 of the type described above is suitable for use in the following embodiment of a method in accordance with the disclosure.

A method of removing a layer of encrustation from an inner surface of a pipe 5 forming part of a heat exchanger or other tubes, such as tubes connecting parts of the heat exchanger together, comprises a first phase in which a pipe cleaning device 1 is inserted into the pipe 5, fluid is forced into the pipe 5 to drive the pipe cleaning device 1 along the pipe 5, thereby removing a layer or amount of encrustation, and removing the pipe cleaning device 1 from the pipe 5. A second phase and subsequent phases may be provided, each repeating these steps of the first phase.

Whereas the prior art methods attempt to remove all of the encrustations from the inner surface of the pipe 5, in the disclosure these steps are preferably repeated only until the thickness of the layer of encrustation has reduced to a required thickness.

The working surfaces are urged outwardly, but not beyond an outer diameter of the cleaning tool 100. It is preferable that the cleaning tool 100 is selected to have an outer diameter that is substantially equal to the inner diameter of the pipe 5. However, in some cases, the pipe 5 may include intentional protrusions such as welds, the pipe diameter may vary along its length within pipe manufacturing tolerances, and tolerances introduced by any bends in the pipe. Accordingly, the available diameter for the pipe cleaning device 1 may be smaller than the nominal inner diameter of the pipe 5. In which case the outer diameter of the cleaning tool 100 may be smaller than the nominal inner diameter of the pipe 5 by an amount suitable to avoid such obstacles. For example, the maximum diameter of the pipe cleaning device 1 (i.e. when the arms 200 extend fully outward) may be from 85% to 97.5% of the nominal diameter of the pipe 5. By configuring the pipe cleaning device in this way, the force urging the working surfaces outwardly will not be applied to the pipe 5, but will simply act to centre the pipe cleaning device 1 within the pipe 5.

Once the thickness of the layer of encrustation has reduced to a required thickness, the cleaning process is stopped. In this way a desirable amount of encrustation may be retained. Preferably, a layer of encrustation having a thickness in the range 1mm to 4mm is retained. Such a retained layer of encrustation has been found to protect the pipe 5 from corrosion and erosion by slurry.

As described above, the pipe cleaning device 1 may comprise a propelling piston 10 and multiple cleaning tools 100. It is preferable to use a pipe cleaning device 1 for which the cleaning tools 100 are attachable to and detachable from the propelling piston 10 and each other. Such a pipe cleaning device 1 can be used in the first phase without a cleaning tool 100, or with only a small number of cleaning tools 100. This is useful, because in the first phase there can be large amounts of encrustation that would hinder the passage of the pipe cleaning device 1 along the pipe 5. It is for this reason that pigs are not used in the prior art with encrustations as hard as those found in bauxite processing (these can include one or more of: iron titanate; boehmite; calcium titanate; quartz; cancrinite; vishnevite; natrodavyne; sodalite; alumosilicates; hematite; magnetite; and/or other components of bauxite or compounds formed from Bayer liquor during the process of digestion). The inventors have found that by carrying out the first phase without a cleaning tool 100, or with only a small number of cleaning tools 100, the first phase can be completed successfully without the pipe cleaning device 1 becoming lodged in the pipe. If the first phase is carried out with a large number of cleaning tools 100, then the passage of the pipe cleaning device 1 down the pipe 5 will be greatly resisted by the engagement of many working surfaces with the encrustations.

Similarly, it has been found beneficial to gradually increase the amount of encrustation removed in each phase of the method by restricting the maximum diameter of the pipe cleaning device 1 in the early phases and allowing this to increase in subsequent phases (up to the maximum diameter discussed above).

The maximum pipe cleaning device 1 diameter may be adjusted by varying the axial position of the stop 120. Alternatively, or additionally, the length of the teeth 400 can be varied.

Furthermore, during the first phase it is preferable that the pump, which drives the fluid down the pipe 5, does not provide its maximum output pressure unless the pipe cleaning device 1 becomes stuck. If the pipe cleaning device 1 is stuck in the pipe 5, there is then the ability to increase the pressure to dislodge the pipe cleaning device 1.

For the second phase, and/or for later phases, further cleaning tools 100 may be attached to the pipe cleaning device 1 to form a larger pipe cleaning device 1 with a greater capacity for removing the encrustations. Since, by this stage, the encrustations that protruded the greatest distance into the pipe 5 will have mostly been removed, it is now much safer to use a larger number of cleaning tools 100.

For the second phase, and/or for later phases it can also be advantageous to operate the pump to provide a larger output pressure, owing to the increased amount of engagement of the pipe cleaning device 1 with encrustations.

In preferable embodiments, the pressure of the fluid is controlled to drive the pipe cleaning device 1 at a speed in the range 1.5m/s to 2.5m/s.

As described above, the propelling piston 10 preferably comprises apertures. This can allow a portion of the fluid driving the pipe cleaning device 1 along the pipe 5 to pass the propelling piston 10 and thereby dislodge any loose matter ahead of the pipe cleaning device 1.

Using the adjustable pipe cleaning device 1 described above (whether it be pneumatic and/or hydraulic or sprung), the force urging the working surfaces outwardly can be modified for a particular task. For example, low pneumatic or hydraulic pressures and/or low spring forces can be used if the encrustations are likely to trap the pipe cleaning device 1 in the pipe 5. In such a situation, a low urging force will allow the arms to deflect more easily, permitting passage of the pipe cleaning device in the pipe. Higher pneumatic or hydraulic pressures and/or higher spring forces can be used to increase the cutting effect of the pipe cleaning device 1.

The method set out above can be used to clean the pipes 5 of a heat exchanger or other tubes in, for example, an alumina extraction plant. The method of operating such a plant may include mixing ground bauxite with caustic liquor to form a slurry, and forcing the slurry along a heated pipe 5 thereby forming a solution of alumina in the caustic liquor along with a suspension of residue. An unwanted result of the operation involves the crystallisation or deposition of material on the inside surface of the pipe 5 forming the encrustations. The method of operating the plant will periodically comprise removing some of the encrustations using the method discussed above.

This method can be aided by washing the inner surface of the pipe 5 with acid before utilising the pipe cleaning device 1.

It has been found that the method of cleaning described above can form grooves in the encrustation. The grooves form discontinuities between regions of the encrustation around the circumference of the pipe 5. Surprisingly, this has been found to reduce the tolerance of the encrustation to heat shock. Heating the pipe 5 following the pigging steps has been found to cause fracture of the discontinuous regions of encrustation leading to greater removal of encrustation. The pipe is heated to produce a difference in temperature across the thickness of the pipe (i.e. in the radial direction) in the range 100°C to 200°C. The pipe 5 is substantially empty or contains a flow of cold liquor (or at least is not receiving a flow of hot slurry) during this heating step, which is thus different from the normal heating of the pipe 5 during the processing of slurry.

Preferably, during this heating step, the pipe 5 is heated to a temperature in the range of 250 to 400°C.

## Claims

1. A method of removing a layer of encrustation from an inner surface of a pipe (5), comprising the following steps in order:
a. providing a pipe cleaning device (1) having a propelling piston (10) to which at least one cleaning tool (100) is attachable that comprises circumferentially spaced moveable working surfaces for removing deposits from the inner surface of the pipe (5), wherein the working surfaces are urged apart;
b. inserting the propelling piston (10) into the pipe (5) without a cleaning tool (100); driving the propelling piston (10) along the pipe (5); and removing the pipe cleaning device (1) from the pipe (5);
c. attaching the cleaning tool (100) and inserting the pipe cleaning device (1) into the pipe (5);
d. driving the pipe cleaning device (1) along the pipe (5) and thereby removing a layer of encrustation;
e. removing the pipe cleaning device (1) from the pipe (5);
f. repeating steps c. to e. until the thickness of the layer of encrustation has reduced to a required thickness; and
g. retaining the required thickness of encrustation as a protective layer.

2. The method of claim 1, wherein step b. or step d. comprises forcing fluid into the pipe (5) to drive the pipe cleaning device (1) along the pipe (5).

3. The method of claim 2, wherein the force of the fluid is controlled to drive the pipe cleaning device (1) at a speed in the range 1.5 m/s to 2.5 m/s.

4. The method of any preceding claim, wherein driving the propelling piston (10) along the pipe (5) in step b. comprises:
providing a pump that can expel fluid at pressures up to a first pressure; and
pumping fluid into the pipe (5) at a second pressure,
wherein the second pressure is no more than 50% of the first pressure.

5. The method of claim 4, wherein step d. comprises pumping fluid into the pipe (5) at a third pressure, wherein the third pressure is greater than the second pressure.

6. The method of any of claims 2 to 5, wherein the propelling piston (10) comprises apertures (260) to allow a portion of the fluid driving the pipe cleaning device (1) along the pipe (5) to pass the propelling piston (10) and thereby dislodge any loose matter ahead of the pipe cleaning device (1).

7. The method of any preceding claim, wherein the method further comprises attaching a further cleaning tool (100) to the pipe cleaning device (1) between steps e. and f..

8. The method of any preceding claim, wherein the required thickness is in the range 1 mm to 4 mm.

9. The method of any preceding claim, wherein the working surfaces define a maximum outer diameter and in step a. the pipe cleaning device (1) is selected to have a maximum outer diameter in the range from 85% of the inner diameter of the pipe (5) to 97.5% of the inner diameter of the pipe (5).

10. The method of any preceding claim, wherein the working surfaces are urged outwardly by an adjustable pneumatic and/or hydraulic pressure within the pipe cleaning device (1).

11. The method of any one of claims 1 to 9, wherein the working surfaces are urged outwardly by springs (250).

12. The method of any preceding claim wherein the encrustations are formed from one or more of: iron titanate; boehmite; calcium titanate; quartz; cancrinite; vishnevite; natrodavyne; sodalite; alumosilicates; hematite; magnetite; and/or other components of bauxite or compounds formed during processing bauxite from slurry.

13. The method of any preceding claim, wherein the working surfaces define a maximum outer diameter that can be adjusted, and between step e. and step f., the maximum outer diameter is increased.

14. A method of operating an alumina extraction plant comprising:
i. mixing ground bauxite with caustic liquor to form a slurry;
ii. forcing the slurry along a heated pipe (5) thereby forming a solution of alumina in the caustic liquor along with a suspension of residue;
wherein material is crystallised or deposited on the inside surface of the pipe (5) to form encrustations, and the method further comprises:
iii. removing some of the encrustations using the method of any preceding claim.

15. The method of claim 14, further comprising washing the inner surface of the pipe (5) with acid between steps ii. and iii..

16. The method of claim 14 or claim 15, further comprising heating the pipe (5) after step iii. and then repeating steps i. and ii..

17. The method of claim 16, wherein the pipe (5) is heated to produce a difference in temperature across its thickness in the range 100°C to 200°C.

## Patentansprüche

1. Verfahren zum Entfernen einer Verkrustungsschicht von einer Innenfläche eines Rohrs (5), das der Reihe nach die folgenden Schritte umfasst:
a. Bereitstellen einer Rohrreinigungsvorrichtung (1) mit einem Vortriebskolben (10), an dem mindestens ein Reinigungswerkzeug (100) montierbar ist, das in Umfangsrichtung beabstandete bewegliche Arbeitsflächen zum Entfernen von Ablagerungen von der Innenfläche des Rohrs (5) umfasst, wobei die Arbeitsflächen auseinandergedrückt werden;
b. Einsetzen des Vortriebskolbens (10) in das Rohr (5) ohne Reinigungswerkzeug (100); Vortreiben des Vortriebskolbens (10) entlang des Rohrs (5); und Entfernen der Rohrreinigungsvorrichtung (1) aus dem Rohr (5);
c. Anbringen des Reinigungswerkzeugs (100) und Einsetzen der Rohrreinigungsvorrichtung (1) in das Rohr (5);
d. Vortreiben der Rohrreinigungsvorrichtung (1) entlang des Rohrs (5) und dadurch Entfernen einer Verkrustungsschicht;
e. Entfernen der Rohrreinigungsvorrichtung (1) aus dem Rohr (5);
f. Wiederholen der Schritte c. bis e., bis die Dicke der Verkrustungsschicht auf eine erforderliche Dicke reduziert ist;
und
g. Beibehalten der erforderlichen Dicke der Verkrustungsschicht als Schutzschicht.

2. Verfahren nach Anspruch 1, bei dem Schritt b. oder Schritt d. das Einpressen von Fluid in das Rohr (5) umfasst, um die Rohrreinigungsvorrichtung (1) entlang des Rohrs (5) zu treiben.

3. Verfahren nach Anspruch 2, bei dem die Kraft des Fluids gesteuert wird, um die Rohrreinigungsvorrichtung (1) mit einer Geschwindigkeit im Bereich von 1,5 m/s bis 2,5 m / s anzutreiben.

4. Verfahren nach einem der vorhergehenden Ansprüche, bei dem das Antreiben des Vortriebskolbens (10) entlang des Rohrs (5) in Schritt b. umfasst:
Bereitstellen einer Pumpe, die Fluid mit Drücken bis zu einem ersten Druck ausstoßen kann; und
Pumpen von Fluid in das Rohr (5) mit einem zweiten Druck, wobei der zweite Druck nicht mehr als 50 % des ersten Drucks beträgt.

5. Verfahren nach Anspruch 4, bei dem Schritt d. das Pumpen von Fluid in das Rohr (5) mit einem dritten Druck umfasst, wobei der dritte Druck größer als der zweite Druck ist.

6. Verfahren nach einem der Ansprüche 2 bis 5, bei dem der Vortriebskolben (10) Öffnungen (260) umfasst, um es einem Teil des Fluids, das die Rohrreinigungsvorrichtung (1) entlang des Rohrs (5) antreibt, zu ermöglichen, den Vortriebskolben (10) zu passieren und dadurch loses Material vor der Rohrreinigungsvorrichtung (1) zu entfernen.

7. Verfahren nach einem der vorhergehenden Ansprüche, bei dem das Verfahren ferner das Montieren eines weiteren Reinigungswerkzeugs (100) an der Rohrreinigungsvorrichtung (1) zwischen den Schritten e. und f. umfasst.

8. Verfahren nach einem der vorhergehenden Ansprüche, bei dem die erforderliche Dicke im Bereich von 1 mm bis 4 mm liegt.

9. Verfahren nach einem der vorhergehenden Ansprüche, bei dem die Arbeitsflächen einen maximalen Außendurchmesser definieren und bei dem in Schritt a. die Rohrreinigungsvorrichtung (1) so ausgewählt wird, dass sie einen maximalen Außendurchmesser im Bereich von 85 % des Innendurchmessers des Rohrs (5) bis 97,5 % des Innendurchmessers des Rohrs (5) aufweist.

10. Verfahren nach einem der vorhergehenden Ansprüche, bei dem die Arbeitsflächen durch einen einstellbaren pneumatischen und/oder hydraulischen Druck innerhalb der Rohrreinigungsvorrichtung (1) nach außen gedrückt werden.

11. Verfahren nach einem der Ansprüche 1 bis 9, bei dem die Arbeitsflächen durch Federn (250) nach außen gedrückt werden.

12. Verfahren nach einem der vorhergehenden Ansprüche, bei dem die Verkrustungen aus einem oder mehreren der folgenden Materialien gebildet werden: Eisentitanat, Böhmit, Calciumtitanat, Quarz, Cancrinit, Vishnevit, Natrodavyn, Sodalith, Alumosilikate, Hämatit, Magnetit und/oder anderen Komponenten von Bauxit oder Verbindungen, die bei der Verarbeitung von Bauxit aus einer Aufschlämmung entstehen.

13. Verfahren nach einem der vorhergehenden Ansprüche, bei dem die Arbeitsflächen einen maximalen Außendurchmesser definieren, der einstellbar ist, und bei dem zwischen Schritt e. und Schritt f. der maximale Außendurchmesser vergrößert wird.

14. Verfahren zum Betreiben einer Aluminiumoxid-Extraktionsanlage, mit den Schritten:
i. Mischen von gemahlenem Bauxit mit einer Lauge, um eine Aufschlämmung zu bilden;
ii. Pressen der Aufschlämmung durch ein erhitztes Rohr (5), wodurch eine Lösung von Aluminiumoxid in der Lauge zusammen mit einer Suspension von Rückständen gebildet wird;
wobei Material an der Innenfläche des Rohrs (5) kristallisiert oder abgelagert wird, um Verkrustungen zu bilden, und das Verfahren ferner umfasst:
iii. Entfernen eines Teils der Verkrustungen unter Verwendung des Verfahrens nach einem der vorhergehenden Ansprüche.

15. Verfahren nach Anspruch 14, ferner mit dem Schritt des Waschens der Innenfläche des Rohrs (5) mit Säure zwischen den Schritten ii. und iii..

16. Verfahren nach Anspruch 14 oder 15, ferner mit den Schritten des Erhitzens des Rohrs (5) nach Schritt iii. und anschließendes Wiederholens der Schritte i. und ii..

17. Verfahren nach Anspruch 16, bei dem das Rohr (5) erhitzt wird, um eine Temperaturdifferenz über seine Dicke im Bereich von 100 °C bis 200 °C zu erzeugen.

## Revendications

1. Procédé d'élimination d'une couche d'incrustation d'une surface interne d'un tuyau (5), comprenant les étapes suivantes dans l'ordre :
a. la fourniture d'un dispositif de nettoyage de tuyau (1) ayant un piston de propulsion (10) auquel peut être fixé au moins un outil de nettoyage (100) qui comprend des surfaces de travail mobiles espacées circonférentiellement pour éliminer des dépôts de la surface interne du tuyau (5), dans lequel les surfaces de travail sont éloignées ;
b. l'insertion du piston de propulsion (10) dans le tuyau (5) sans outil de nettoyage (100) ; l'entraînement du piston de propulsion (10) le long du tuyau (5) ; et le retrait du dispositif de nettoyage de tuyau (1) du tuyau (5) ;
c. la fixation de l'outil de nettoyage (100) et l'insertion du dispositif de nettoyage de tuyau (1) dans le tuyau (5) ;
d. l'entraînement du dispositif de nettoyage de tuyau (1) le long du tuyau (5) et ainsi l'élimination d'une couche d'incrustation ;
e. le retrait du dispositif de nettoyage de tuyau (1) du tuyau (5) ;
f. la répétition des étapes c. à e. jusqu'à ce que l'épaisseur de la couche d'incrustation ait été réduite à une épaisseur requise ; et
g. le maintien de l'épaisseur d'incrustation requise comme couche protectrice.

2. Procédé selon la revendication 1, dans lequel l'étape b. ou l'étape d. comprend le forçage de fluide dans le tuyau (5) pour entraîner le dispositif de nettoyage de tuyau (1) le long du tuyau (5).

3. Procédé selon la revendication 2, dans lequel la force du fluide est commandée pour entraîner le dispositif de nettoyage de tuyau (1) à une vitesse dans la plage de 1,5 m/s à 2,5 m/s.

4. Procédé selon une quelconque revendication précédente, dans lequel l'entraînement du piston de propulsion (10) le long du tuyau (5) à l'étape b. comprend :
la fourniture d'une pompe capable d'expulser du fluide à des pressions allant jusqu'à une première pression ; et
le pompage de fluide dans le tuyau (5) à une deuxième pression,
dans lequel la deuxième pression n'est pas supérieure à 50 % de la première pression.

5. Procédé selon la revendication 4, dans lequel l'étape d. comprend le pompage de fluide dans le tuyau (5) à une troisième pression, dans lequel la troisième pression est supérieure à la deuxième pression.

6. Procédé selon l'une quelconque des revendications 2 à 5, dans lequel le piston de propulsion (10) comprend des ouvertures (260) pour permettre à une portion du fluide entraînant le dispositif de nettoyage de tuyau (1) le long du tuyau (5) de passer le piston de propulsion (10) et de ce fait de déloger toute matière libre en avant du dispositif de nettoyage de tuyau (1).

7. Procédé selon l'une quelconque des revendications précédentes, dans lequel le procédé comprend en outre la fixation d'un autre outil de nettoyage (100) au dispositif de nettoyage de tuyau (1) entre les étapes e. et f..

8. Procédé selon une quelconque revendication précédente, dans lequel l'épaisseur requise se situe dans la plage de 1 mm à 4 mm.

9. Procédé selon une quelconque revendication précédente, dans lequel les surfaces de travail définissent un diamètre externe maximal et dans l'étape a. le dispositif de nettoyage de tuyau (1) est choisi pour avoir un diamètre externe maximal dans la plage de 85 % du diamètre interne du tuyau (5) à 97,5 % du diamètre interne du tuyau (5).

10. Procédé selon une quelconque revendication précédente, dans lequel les surfaces de travail sont poussées vers l'extérieur par une pression pneumatique et/ou hydraulique réglable à l'intérieur du dispositif de nettoyage de tuyau (1).

11. Procédé selon l'une quelconque des revendications 1 à 9, dans lequel les surfaces de travail sont poussées vers l'extérieur par des ressorts (250).

12. Procédé selon une quelconque revendication précédente, dans lequel les incrustations sont formées à partir d'un ou plusieurs des éléments suivants : titanate de fer ; boehmite ; titanate de calcium ; quartz ; cancrinite ; vishnévite ; natrodavyne ; sodalite ; aluminosilicates ; hématite ; magnétite ; et/ou autres composants de bauxite ou composés formés lors du traitement de bauxite à partir de boue.

13. Procédé selon une quelconque revendication précédente, dans lequel les surfaces de travail définissent un diamètre externe maximal qui peut être réglé, et entre l'étape e. et l'étape f., le diamètre externe maximal est augmenté.

14. Procédé d'exploitation d'une installation d'extraction d'alumine comprenant :
i. le mélange de bauxite broyée avec de la liqueur caustique pour former une boue ;
ii. le forçage de la boue le long d'un tuyau (5) chauffé formant ainsi une solution d'alumine dans la liqueur caustique avec une suspension de résidu ;
dans lequel le matériau est cristallisé ou déposé sur la surface intérieure du tuyau (5) pour former des incrustations, et le procédé comprend en outre :
iii. l'élimination de certaines incrustations en utilisant le procédé selon l'une quelconque des revendications précédentes.

15. Procédé selon la revendication 14, comprenant en outre le lavage de la surface interne du tuyau (5) avec de l'acide entre les étapes ii. et iii..

16. Procédé selon la revendication 14 ou la revendication 15, comprenant en outre le chauffage du tuyau (5) après l'étape iii. puis la répétition des étapes i. et ii..

17. Procédé selon la revendication 16, dans lequel le tuyau (5) est chauffé pour produire une différence de température sur son épaisseur dans la plage de 100 °C à 200 °C.
